# EUROPÄISCHE PATENTSCHRIFT

(11) **EP 3 183 567 B1**
(45) Veröffentlichungstag und Bekanntmachung des Hinweises auf die Patenterteilung: **29.05.2024**
(21) Anmeldenummer: 15759668.5
(22) Anmeldetag: 18.08.2015
(51) Int. Cl.: G01N 27/416, G06F 1/18

(54) **VORRICHTUNG MIT SENSOREINHEIT UND TRANSMITTER ZUR ERMITTLUNG EINER MESSGRÖSSE**
DEVICE WITH SENSOR UNIT AND TRANSMITTER FOR DETERMINING A MEASUREMENT VARIABLE
DISPOSITIF AVEC UNITÉ DE CAPTEUR ET TRANSMETTEUR POUR DETERMINER UNE GRANDEUR DE MESURE

(30) Priorität: 19.08.2014 DE 102014111805
(43) Veröffentlichungstag der Anmeldung: 28.06.2017
(73) Patentinhaber: KROHNE Messtechnik GmbH, 47058 Duisburg (DE)
(72) Erfinder: KOCH, Christian, 58453 Witten (DE); SCHWANER, Andreas, 46519 Alpen (DE)
(74) Vertreter: Gesthuysen Patentanwälte
(86) Internationale Anmeldenummer: PCT/EP2015/068946
(87) Internationale Veröffentlichungsnummer: WO 2016/026857

(56) Entgegenhaltungen:
- EP-A1- 0 994 350
- WO-A1-2007/012508
- JP-A- 2012 078 109
- US-A1- 2004 010 739
- US-A1- 2008 061 792
- US-A1- 2009 204 250
- US-A1- 2013 127 635
- "Performing pH Measurements", White Papers, 27. Juli 2012 (2012-07-27), Seiten 1-2, XP055227140, Gefunden im Internet: URL:http://www.ni.com/white-paper/4701/en/ [gefunden am 2015-11-10] -& "DAQ NI 6052E User Manual Multifunction I/O Devices for PCI/PXI/1394 Bus Computers NI 6052E User Manual", , 1. Oktober 2002 (2002-10-01), Seiten 1-132, XP055227142, Gefunden im Internet: URL:http://www.biomech.hacettepe.edu.tr/ma nuals/NI 6052E User Manual.pdf [gefunden am 2015-11-10] -& Charlie Stiernberg: "NI CompactDAQ für Ethernet", , 1. April 2010 (2010-04-01), Seiten 28-30, XP055227225, Gefunden im Internet: URL:ftp://ftp.ni.com/pub/branches/germany/ artikel/2010/11_nov/ni_03_vfi.pdf [gefunden am 2015-11-10] -& "Advanced RFID Measurements: Basic Theory to Protocol Conformance Test", tutorials, 19. Dezember 2013 (2013-12-19), Seiten 1-14, XP055227230, Gefunden im Internet: URL:http://www.ni.com/t
- Anonymous: "Data Sheet LIQ-GLASS PG", , 1 July 2008 (2008-07-01), pages 1-1, XP055515183, Retrieved from the Internet: URL:http://www.insatech.com/downloads/Liq- glass_PG_0.pdf [retrieved on 2018-10-15]

## Beschreibung

Die Erfindung betrifft eine Vorrichtung zur Ermittlung mindestens einer Messgröße, die durch den unabhängigen Anspruch definiert wird. Weiterhin bezieht sich die Erfindung auf eine Vorrichtung mit einer Sensoreinheit zur Ermittlung mindestens einer Prozessgröße und einem Transmitter zur Verarbeitung von Primärsignalen mindestens einer Sensoreinheit. Dabei kann es sich bei der Messgröße beispielsweise um den pH-Wert, den Anteil des gelösten Sauerstoffs oder Chlors, den Füllstand, die Temperatur, den Durchfluss, den Massendurchfluss, den Trübungsgrad, das Redox-Potential oder die elektrische Leitfähigkeit eines Mediums handeln. Das Medium ist dabei beispielsweise eine Flüssigkeit, ein Schüttgut, ein Gas oder ein Gemisch.

In der modernen Prozessautomatisierung ist es üblich, Mess- oder Prozessgrö-ßen zu ermitteln, indem ein Messgerät ein - in aller Regel elektrisches - Primärsignal erzeugt, das abhängig von der Messgröße ist. Bei der potentiometrischen Messung des pH-Werts wird beispielsweise die elektromotorische Kraft durch zwei Elektroden gemessen, von denen sich eine in einer Pufferlösung und eine in der zu messenden Probe befindet. Die sich daraus als Primärsignal ergebende elektrische Spannung erlaubt die Ermittlung des pH-Werts. Bei der Durchflussmessung nach dem Vortex-Prinzip beinhaltet beispielsweise das Primärsignal die Frequenz der durch einen Störkörper erzeugten Wirbel, aus der auf den Durchfluss geschlossen wird.

Das Primärsignal wird dabei von einigen Messgeräten selbst in den Wert für die Messgröße umgerechnet und ausgegeben. Alternativ werden die Primärsignale von einem sogenannten Messumformer - eine andere Bezeichnung ist Transmitter - vollständig verarbeitet oder zumindest aufbereitet und in einem Standardformat an eine übergeordnete Einheit, z. B. eine Leitwarte übermittelt, um dort verarbeitet zu werden.

Je nach den zu überwachenden Prozessen oder Zuständen in einem Prozess kann es erforderlich sein, unterschiedliche Messgrößen zu ermitteln. Weiterhin kann auch in Bezug auf Reinigungs- oder Kalibrierungszwecke ein Austausch der Messanordnung erforderlich sein. Wird beispielsweise für die Zeit der Kalibrierung ein Messgerät durch ein anderes ersetzt, so kann der Stillstand des überwachten Prozesses reduziert werden. Zudem besteht im Sinne der Ökonomie, aber auch Ökologie das Streben danach, möglichst viele Gerätschaften zu vereinfachen und zu vereinheitlichen, um bei dem sogenannten Baukastenprinzip zu enden.

Bekannte Vorrichtungen und Messanordnungen werden beispielsweise in EP 0 994 350 A1, WO 2007/012508 A1, US 2008/061792 A1 und US 2004/010739 A1 beschrieben.

Der Erfindung liegt daher die Aufgabe zugrunde, eine Vorrichtung zur Ermittlung einer Messgröße - sowie eine Sensoreinheit und einen Transmitter - anzugeben, das möglichst einfach eine Anpassung an die Messbedingungen erlaubt.

Die erfindungsgemäße Vorrichtung zur Ermittlung mindestens einer Messgröße, bei der die zuvor hergeleitete und aufgezeigte Aufgabe gelöst ist, wird durch den unabhängigen Anspruch 1 definiert und ist zunächst und im Wesentlichen dadurch gekennzeichnet, dass mindestens eine Sensoreinheit und mindestens ein Transmitter vorhanden sind. Dabei erzeugt die Sensoreinheit in Abhängigkeit von der Messgröße mindestens ein elektrisches Primärsignal. Das Primärsignal übermittelt die Sensoreinheit über eine analoge Ausgangsschnittstelle an den Transmitter. Schließlich verarbeitet der Transmitter das Primärsignal.

Die Erfindung beruht darauf, dass die Mess-Vorrichtung aus wenigstens einem Transmitter und einer Sensoreinheit besteht. Daher ist die für die Ermittlung der Messgröße erforderliche Elektronik im Transmitter angeordnet.

Die Sensoreinheit an sich lässt sich relativ einfach und kostengünstig ausgestalten.

Die Sensoreinheit erzeugt dabei nur ein analoges Primärsignal, das über eine analoge Ausgangsschnittstelle ausgegeben wird. Im einfachsten Fall handelt es sich wenigstens um einen elektrischen Kontakt.

Das Primärsignal wird von dem Transmitter empfangen und dort verarbeitet.

In einer Ausgestaltung wird vom Transmitter direkt der Wert für die Messgröße ermittelt. In einer alternativen Ausgestaltung wird das Primärsignal z. B. verstärkt und/oder in ein Standardsignal, z. B. ein 4...20 mA-Signal umgewandelt.

In einer Ausgestaltung ist vorgesehen, dass die Sensoreinheit und der Transmitter reversibel miteinander verbindbar sind. Dies erlaubt den Austausch der Sensoreinheit.

Gemäß der Erfindung wird die Idee der Aufteilung in einzelne funktionale Einheiten bzw. Module erweitert, indem vorgesehen ist, dass der Sensoreinheit mindestens ein Elektronikeinsatz zugeordnet ist. Dabei verfügt der Elektronikeinsatz über mindestens eine analoge Eingangsschnittstelle, über die beispielweise der Empfang des analogen Primärsignals der Sensoreinheit erfolgt.

Der Elektronikeinsatz verarbeitet mindestens das Primärsignal in Hinblick auf die Messgröße. Schließlich sind der Elektronikeinsatz und der Transmitter reversibel miteinander verbindbar.

Gemäß der Erfindung ist ein Elektronikeinsatz vorgesehen, der der Verarbeitung des Primärsignals dient. Dieser Elektronikeinsatz ist dabei speziell auf die Sensoreinheit oder den Typ der Sensoreinheit oder der Messgröße ausgelegt. Weiterhin ist der Elektronikeinsatz flexibel mit dem Transmitter verbunden werden. Damit ergibt sich durch den Elektronikeinsatz für den Transmitter auch die Möglichkeit zur Auswertung der Primärsignale. Die Elektronikeinsätze sind jedoch auch in der Lage, weitere Signale zu verarbeiten. Handelt es sich bei der Sensoreinheit beispielsweise um eine pH-Sonde, so kann der zugehörige Elektronikeinsatz nicht nur die vom pH-Wert abhängige elektrische Spannung als Primärsignal, sondern vorzugsweise auch ein Temperatursignal einer Temperatursonde auswerten.

Ein Wechsel des Typs der Sensoreinheit oder die Erfassung einer weiteren Messgröße lässt sich daher einfach realisieren, indem der Elektronikeinsatz ausgetauscht bzw. ein weiterer mit dem Transmitter verbunden wird.

Die Signale des Elektronikeinsatzes werden dabei in einer Ausgestaltung direkt über eine Ein-/Ausgabe-Schnittstelle des Transmitters ausgegeben. In einer alternativen Ausgestaltung wird das Signal des Elektronikeinsatzes vom Transmitter verarbeitet bzw. in ein auswählbares Ausgabeformat (z. B. 4...20 mA, Hart, Fieldbusfoundation usw.) umgewandelt.

Der Transmitter erlaubt es in einer Ausgestaltung, dass eine Vielzahl von Sensoreinheiten über ihre Elektronikeinsätze angeschlossen werden. In einer weiteren Ausgestaltung verfügt der Transmitter über mehrere Schnittstellen zur Ausgabe von Signalen oder Daten. Die Mehrzahl der Sensoreinheiten und die Mehrzahl an Schnittstellen erlaubt dann eine Vielzahl von Konstellationen zur Ausgabe der jeweiligen Messdaten.

Gemäß der Erfindung erzeugt die Sensoreinheit ein analoges Primärsignal, das von dem zugehörigen Elektronikeinsatz verarbeitet wird. Der Elektronikeinsatz wiederum ist mit dem Transmitter verbunden und übermittelt diesem auch das verarbeitete Primärsignal. Gemäß der Erfindung ist der Elektronikeinsatz in den Transmitter eingebracht und bildet daher auch einen - austauschbaren - Teil des Transmitters.

Die Sensoreinheit und der zugehörige Elektronikeinsatz sind dabei in einer Ausgestaltung reversibel miteinander verbunden.

Insgesamt ist die Vorrichtung - als Messvorrichtung - modular ausgestaltet, was den Austausch der Sensoreinheit, den Wechsel des Messprinzips und auch die Kosten- und Materialreduktion erlaubt.

Gemäß einer weiteren Lehre der Erfindung wird die Aufgabe durch eine Sensoreinheit für die Ermittlung mindestens einer Messgröße gelöst. Dabei verfügt die Sensoreinheit über eine analoge Ausgangsschnittstelle. Die Sensoreinheit erzeugt in Abhängigkeit von der Messgröße mindestens ein elektrisches Primärsignal und gibt das Primärsignal als analoges elektrisches Signal über die analoge Ausgangsschnittstelle aus.

In einer Ausgestaltung dient die Ausgangsschnittstelle auch als Eingangsschnittstelle. Erlaubt die Sensoreinheit beispielsweise die Messung der Leitfähigkeit, so empfängt die Sensoreinheit über die vorgenannte Schnittstelle ein elektrisches Signal, z. B. in Form eines Sinussignals. Dieses Messsignal wird dabei vom Elektronikeinsatz auf die Sensoreinheit gegeben. Eine Leitfähigkeitsmessung fällt jedoch nicht unter beanspruchten Schutzumfang, da eine solche Sensoreinheit kein Primärsignal erzeugt, wie durch Anspruch 1 definiert.

Das Primärsignal der Sensoreinheit wird in einem Beispiel, das nicht unter dem beanspruchten Schutzumfang fällt, von der Sensoreinheit in Zusammenwirken mit anderen Messkomponenten erzeugt. So wird beispielsweise eine elektrische Spannung zwischen der Sensoreinheit und eine Referenzeinheit als Primärsignal erzeugt.

Für eine Reihe von Messprinzipien ist es erforderlich, dass die verwendeten Sensoreinheiten kalibriert werden. Weiterhin hängt das Primärsignal ggf. auch von spezifischen Kenngrößen der Sensoreinheit ab. Diese sensorspezifischen Daten sind daher für die Auswertung der Primärsignale erforderlich und sollten im Transmitter bzw. im zugeordneten Elektronikeinsatz bekannt sein.

In einer Ausgestaltung ist vorgesehen, dass die Sensoreinheit offline unter vorgebbaren Umgebungsbedingungen kalibrierbar ist. Die Sensoreinheit lässt sich daher beispielweise in einem Labor und damit offline, d. h. außerhalb des Prozesses kalibrieren. Hierdurch ist es insbesondere möglich, dass die Kalibrierung unter vorgebbaren und vorzugsweise konstanten Umgebungsbedingungen stattfinden kann. Dies erhöht die Lebensdauer und führt zu einer Kostenreduktion. Die Sensoreinheit - ggf. in Verbindung mit dem Elektronikeinsatz - kann daher an einem Ort kalibriert werden, der sich vom Einsatzort der Sensoreinheit unterscheidet.

In einer Ausgestaltung lassen sich die erforderlichen Daten durch einen Benutzer eingeben. In einer weiteren Ausgestaltung umfassen der Transmitter oder der Elektronikeinsatz die relevanten Daten. In einer weiteren Ausgestaltung greift der Transmitter oder der Elektronikeinsatz auf eine entsprechende Datenbank zu.

Gemäß der Erfindung verfügt die Sensoreinheit über mindestens einen Datenträger. Dabei sind in dem Datenträger Daten, die der Sensoreinheit zugeordnet sind, speicherbar. Der Datenträger selbst ist an oder in einem Gehäuse der Sensoreinheit angeordnet.

Der Datenträger ist in einer Ausgestaltung ein optisches Element wie ein Barcode oder ein QR-Code, der wenigstens Daten über den Typ der Sensoreinheit oder eine Kennzeichnung der speziellen Sensoreinheit beinhaltet.

In einer alternativen Ausgestaltung handelt es sich bei dem Datenträger um einen RFID-Tag (von radio-frequency identification) oder einen NFC-Tag (von near field communication), in denen beispielsweise auch Kalibrierungsdaten der Sensoreinheit abgelegt werden.

In einer Ausgestaltung ist in dem Datenträger wenigstens eine Information hinterlegt, die der Identifikation der Sensoreinheit dient.

Mit dem prinzipiellen Aufbau der Sensoreinheit befassen sich die folgenden Ausgestaltungen.

Dabei ist gemäß der Erfindung vorgesehen, dass die Sensoreinheit nur über die analoge Ausgangsschnittstelle verfügt.

Gemäß der Erfindung ist die Sensoreinheit frei von - insbesondere elektronischen - Elementen, die aus dem Primärsignal ein digitales Signal erzeugen. Alternativ oder ergänzend ist die Sensoreinheit frei von Elementen, die aus dem Primärsignal einen Wert der Messgröße ermitteln.

Gemäß der Erfindung ist daher die Sensoreinheit nicht in der Lage, aus dem Primärsignal den Wert der Messgröße zu ermitteln oder das Primärsignal für eine weitere Kommunikation zu digitalisieren.

In einer weiteren Ausgestaltung sind in der Sensoreinheit analoge elektronische Elemente vorgesehen, die das Primärsignal verstärken oder eine Wandlung zwischen Strom- oder Spannungssignal bewirken, die also ein rein analoges elektrisches Signal erzeugen.

In einer weiteren Ausgestaltung ist die Sensoreinheit frei von elektronischen Bauteilen. Die Sensoreinheit umfasst daher im Wesentlichen nur die Komponenten, die ausgehend von der Messgröße das elektrische Primärsignal erzeugen. Eine weitere Verarbeitung oder Aufbereitung in der Sensoreinheit selbst ist nicht möglich.

Im Falle der Ermittlung des pH-Werts verfügt die Sensoreinheit daher nur über Elektroden zur Messung des durch das Medium erzeugten elektrischen Potentials.

Weitere primäre Messelemente sind in weiteren Ausgestaltungen ebenfalls vorhanden. Ist beispielsweise ein temperaturabhängiges Widerstandselements vorgesehen, so dient das Element der eigentlichen Temperaturmessung und ist in diesem Sinne nicht als elektronisches Bauteil zu verstehen.

Gemäß einer zusätzlichen Lehre bezieht sich die Erfindung auf einen Transmitter für die Verarbeitung von Primärsignalen, die von mindestens einer Sensoreinheit stammen. Der Transmitter verfügt dabei über mindestens einen Elektronikaufnahmeplatz, in den ein Elektronikeinsatz eingebracht werden kann. Der Elektronikeinsatz ist dabei der Sensoreinheit zugeordnet und dient der Verarbeitung der Primärsignale der Sensoreinheit. Dabei erlaubt es der Elektronikaufnahmeplatz, dass der Elektronikeinsatz reversibel eingebracht wird.

Der wenigstens eine Elektronikaufnahmeplatz erlaubt es, dass der Transmitter über das reversible Einbringen des Elektronikeinsatzes für die jeweilige Sensoreinheit adaptiert ist und damit auch passend über die Komponenten verfügt, die für die Verarbeitung der Primärsignale der Sensoreinheit erforderlich sind.

In einer Ausgestaltung verfügt der Transmitter über mindestens eine Datenleseeinheit zum Einlesen von Daten aus einem Datenträger der Sensoreinheit. Je nach der Ausgestaltung des Datenträgers ist auch die Datenleseeinheit entsprechend auszuführen. Handelt es sich bei dem Datenträger um eine Art von Beschriftung der Sensoreinheit - wie z. B. ein Bar- oder QR-Code -, so ist ein entsprechender Scanner vorzusehen bzw. ist eine entsprechende Verarbeitung im Transmitter erforderlich. Handelt es sich bei dem Datenträger alternativ um einen RFID- oder NFC-Tag, so erlaubt die Datenleseeinheit das Auslesen der darin gespeicherten Daten.

In einer alternativen oder ergänzenden Ausgestaltung ist über die Datenleseeinheit auch das Schreiben von Daten in den Datenträger der Sensoreinheit möglich. In den Datenträger lassen sich dabei in einer Ausgestaltung Kalibierdaten, z. B. in Form eines Logbuchs einschreiben. Auch weitere Daten können in einer Ausgestaltung vom Transmitter in dem Datenträger eingebracht werden.

In einer Ausgestaltung ist vorgesehen, dass der Transmitter mindestens eine Funk-Schnittstelle aufweist. Diese Funk-Schnittstelle erlaubt in einer Variante die Verbindung zu einer Datenbank oder zu einer übergeordneten Einheit wie einer Leitwarte. In einer weiteren Variante ist über die Funk-Schnittstelle die Kommunikation mit einer elektronischen Einheit (z. B. einem Tablet oder einem Handheld oder eine beliebigen mobilen Kommunikationseinheit) eines Benutzers möglich.

In einer weiteren Ausgestaltung steuert der Transmitter ein Relais an.

In weiteren Ausgestaltungen verfügt der Transmitter von über zusätzliche Schnittstellen, z. B eine USB-Schnittstelle.

In einer weiteren Ausgestaltung verfügt der Transmitter über mindestens eine Ein-/Ausgabe-Schnittstelle, alternativ sind mehrere solche Schnittstellen vorgesehen. Dabei handelt es sich beispielsweise um eine Feldbusschnittstelle, z. B. in Form einer 4...20 mA/HART-, RS485-, FieldbusFoundation- oder einer anderen Schnittstelle zur Ein- oder Ausgabe von Daten oder Signalen.

Ergänzend oder alternativ ist als Teil des Transmitters eine Anzeigen- und/oder Bedieneinheit vorgesehen.

Die oben beschriebene Vorrichtung lässt sich aus der beschriebenen Sensoreinheit bzw. dem beschriebenen Transmitter bilden. Daher gelten die Ausführungen bezüglich der Vorrichtung auch für die Sensoreinheit und den Transmitter und umgekehrt.

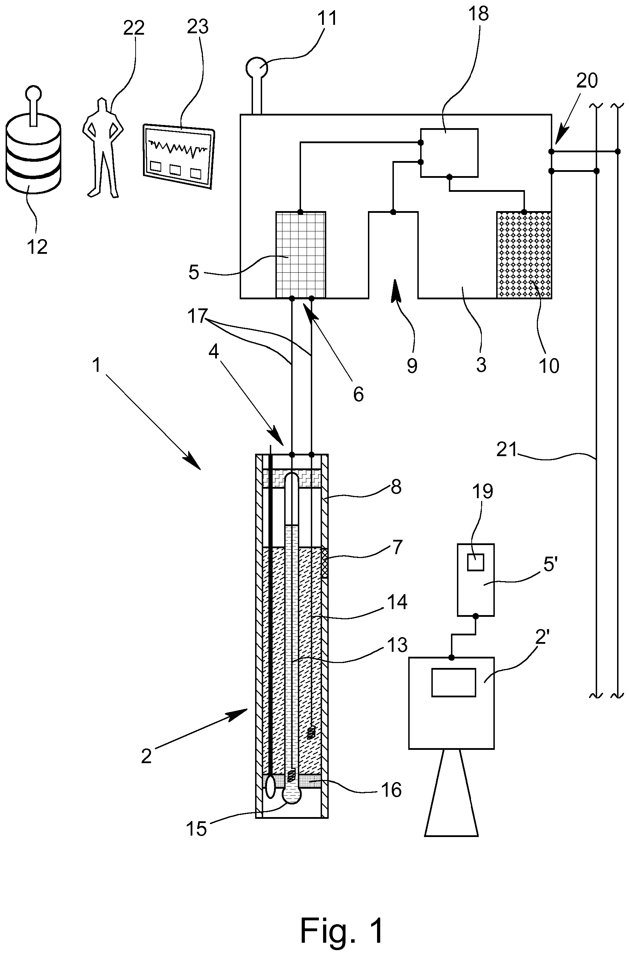

Im Einzelnen gibt es eine Vielzahl von Möglichkeiten, die erfindungsgemäße Vorrichtung, die erfindungsgemäße Sensoreinheit und den erfindungsgemä-ßen Transmitter auszugestalten und weiterzubilden. Dazu wird verwiesen einerseits auf die dem Patentanspruch 1 nachgeordneten Patentansprüche, andererseits auf die folgende Beschreibung eines Ausführungsbeispiels in Verbindung mit der Zeichnung. In der Zeichnung zeigt
- Fig. 1: eine rein schematische Messanordnung.

In der Fig. 1 ist schematisch ein Teil einer Vorrichtung 1 zur Bestimmung einer Messgröße dargestellt. Der eigentlichen Messung dient eine Sensoreinheit 2, die ein Primärsignal erzeugt. Das Primärsignal, das eine vorbekannte Abhängigkeit von der Messgröße aufweist, wird an einen Transmitter 3 übermittelt und von diesem verarbeitet. Die Verarbeitung bezieht sich beispielweise auf eine Aufbereitung, z. B. auf eine Umwandlung in ein 4...20 mA-Signal, oder auf eine Ermittlung des Messwerts für die Messgröße.

Der Transmitter 3 ist dabei so variabel ausgestaltet, dass er auch eine Vielzahl von unterschiedlichen Messsignalen in viele unterschiedliche Ausgangssignale umwandeln kann. Dies ist dabei - wie dargestellt - im Prozess möglich, kann aber auch im Labor, also unter vorgebbaren Umgebungsbedingungen geschehen.

Die Sensoreinheit 2 verfügt über insgesamt zwei analoge Ausgangsschnittstellen 4, über die nur analoge Signale ausgegeben werden. Im gezeigten Beispiel besprochen werden zwei Leitungen, die eine elektrische Spannung übertragen. Verbunden ist die Sensoreinheit 2 mit einem Elektronikeinsatz 5, der ihr bzw. dem mit der jeweiligen Sensoreinheit 2 realisierten Messprinzip zugeordnet ist. Daher können mit einem Elektronikeinsatz 5 unterschiedliche Sensoreinheiten 2 verbunden werden, insofern die Sensoreinheiten 2 jeweils mit dem gleichen Messprinzip der Ermittlung der gleichen Messgröße dienen. Für den Empfang des analogen Primärsignals verfügt der Elektronikeinsatz 5 über eine analoge Eingangsschnittstelle 6.

Die Elektronikeinheit 5 ist auf die Sensoreinheit 2 zugeschnitten, insofern sie die Komponenten beinhaltet, die es erlauben, aus dem Primärsignal den Wert der Messgröße zu ermitteln. Vorzugsweise sind auch entsprechende Auswertealgorithmen hinterlegt.

Ist es je nach Messverfahren erforderlich, dass die Sensoreinheit 2 kalibriert wird oder sind besondere Materialdaten der Sensoreinheit 2 für die Ermittlung der Messgröße erforderlich, so sind diese Daten in einem Datenträger 7 hinterlegt, den die Sensoreinheit 2 mitbringt.

In einer Variante ist nur eine Kennung der Sensoreinheit 2 hinterlegt, woraus ggf. über den Rückgriff auf extern hinterlegte Daten die notwendigen Informationen für die Ermittlung der Messgröße bereitgestellt werden.

Im gezeigten Fall ist der Datenträger 7 in dem Gehäuse 8 eingelassen, das die Sensoreinheit 2 bildet.

Um mit einem Transmitter 3 auch die Messungen von unterschiedlichen Messgrößen zu realisieren, sind hier zwei Elektronikaufnahmeplätze 9 vorgesehen. In der einen befindet sich der Elektronikeinsatz 5. Die andere ist noch frei den Zweitelektronikeinsatz 5' der hier als Füllstandmessgerät angedeuteten Zweitsensoreinheit 2'.

Die Sensoreinheit 2 kann dabei ausgehend von den Daten des Datenträgers 7 automatisch erkannt werden, da der Transmitter 3 über eine Datenleseeinheit 10 verfügt. Handelt es sich bei dem Datenträger 7 um einen Barcode, so ist die Datenleseeinheit 10 ein Barcode-Scanner. Ist wie hier als Datenträger 7 eine NFC-Tag vorgesehen, so liest die Datenleseeinheit 10 die Daten entsprechend ein.

Um auch auf Daten für Sensoreinheiten zugreifen zu können, die keine oder weniger Daten in ihrem Datenträger 7 mit sich mitführen, ist eine Funk-schnittstelle 11 vorgesehen, über die von dem Transmitter 3 auf eine externe Datenbank 12 zugegriffen wird.

Die hier mit dem Transmitter 3 verbundene Sensoreinheit 2 - oder genauer über die in dem Elektronikaufnahmeplatz eingebrachten Elektronikeinsatz 5 - dient der pH-Messung. Dafür sind eine Messelektrode 13 und eine Referenzelektrode 14 vorgesehen. Die Messelektrode 13 befindet sich in einem Glaskörper, der mit einer Glasmembran 15 abschließt. Das Gehäuse 8 der Sensoreinheit 2 wird auf einer Seite von einem Diaphragma 16 begrenzt. Zusätzlich ist noch ein Temperatursensor vorgesehen. An diesen Temperatursensor lässt sich ebenfalls ein elektrischer Kontakt anbringen, so dass auch das Temperatursignal für die Ermittlung des pH-Werts herangezogen werden kann. Für die Übersichtlichkeit ist dies hier nicht dargestellt.

Die beiden Elektroden 13, 14 sind hier direkt über jeweils eine Leitung 17 mit der analogen Eingangsschnittstelle 6 des Elektronikeinsatzes 5 verbunden. Bei der analogen Ausgangsschnittstelle 4 handelt es sich hierbei also nur um zwei elektrische Anschlusskontakte. Alternativ sind die Sensoreinheit 2 und der Elektronikeinsatz 5 über ein - nicht dargestelltes - mehrpoliges Kabel miteinander verbunden.

Aus den jeweils auftretenden elektrischen Potentialen ermittelt der Elektronikeinsatz 5 unter Verwendung von Kalibrierungsdaten ein Maß für den pH-Wert.

Für die Ausgangssignale der Elektronikeinsätze 5, 5' wird vorzugsweise ein einheitliches Format verwendet, so dass der Transmitter 3 diese Signale immer gleich behandeln kann.

Für eine weitere Datenverarbeitung verfügt der Transmitter 3 über einen eigenen Datenspeicher 18, in dem zusätzlich Daten für unterschiedliche Sensoreinheiten 2 bzw. für Elektronikeinsätze 5 hinterlegt sind.

Der Zweitelektronikeinsatz 5' verfügt hier über eine Speichereinheit 19, in der die Daten über eine Mehrzahl von unterschiedlichen Sensoreinheiten 2 bzw. Zweitsensoreinheiten 2' hinterlegbar sind.

Sind die Messdaten passend verarbeitet oder aufbereitet, so übermittelt sie der Transmitter 3 über seine Feldbusschnittstelle 20 und einen Feldbus 21 an eine - hier nicht dargestellte - Leitwarte.

Die Steuerung des Transmitters 3 bzw. damit auch der Messungen durch die Sensoreinheiten 2, 2' wird hier durch einen User 22 unter der Verwendung eines Tablets 23 vorgenommen.

## Patentansprüche

1. Vorrichtung (1) zur Ermittlung mindestens einer Messgröße - insbesondere des pH-Werts - mit mindestens einer Sensoreinheit (2) und mindestens einem Transmitter (3), wobei die Sensoreinheit (2) eingerichtet ist, in Abhängigkeit von der Messgröße mindestens ein elektrisches Primärsignal zu erzeugen, wobei die Sensoreinheit (2) eingereichtet ist, das Primärsignal über eine analoge Ausgangsschnittstelle (4) an den Transmitter (3) zu übermitteln und wobei der Transmitter (3) eingerichtet ist, das Primärsignal zu verarbeiten, und wobei die Sensoreinheit ein Gehäuse aufweist,
wobei
die Sensoreinheit (2) nur über die analoge Ausgangsschnittstelle (4) verfügt, wobei
die Sensoreinheit (2) frei ist von Elementen, die aus dem Primärsignal ein digitales Signal erzeugen und/oder aus dem Primärsignal einen Wert der Messgröße ermitteln und dass die Sensoreinheit (2) daher nicht in der Lage ist, aus dem Primärsignal den Wert der Messgröße zu ermitteln oder das Primärsignal für eine weitere Kommunikation zu digitalisieren und wobei die Sensoreinheit (2) mindestens einen Datenträger (7) aufweist,
wobei in dem Datenträger (7) der Sensoreinheit (2) zugeordnete Daten speicherbar sind und wobei der Datenträger (7) auf und/oder in dem Gehäuse (8) der Sensoreinheit (2) angeordnet ist und
und wobei die Vorrichtung einen Elektronikeinsatz umfasst, wobei der Sensoreinheit (2) der mindestens eine Elektronikeinsatz (5) zugeordnet ist, wobei der Elektronikeinsatz (5) über mindestens eine analoge Eingangsschnittstelle (6) verfügt, wobei der Elektronikeinsatz (5) eingerichtet ist, mindestens das Primärsignal in Hinblick auf die Messgröße zu verarbeiten und wobei der Elektronikeinsatz (5) und der Transmitter (3) reversibel miteinander verbunden sind und
wobei der Transmitter (3) zur Verarbeitung von Primärsignalen mindestens einer Sensoreinheit (2) mindestens einen Elektronikaufnahmeplatz (9) für einen der Sensoreinheit (2) zugeordneten und die Primärsignale der Sensoreinheit (2) verarbeitenden Elektronikeinsatz (5) aufweist, wobei der Elektronikaufnahmeplatz (9) ein reversibles Einbringen des Elektronikeinsatzes (5) erlaubt.

2. Vorrichtung (1) nach Anspruch 1, **dadurch gekennzeichnet, dass** es sich bei dem Datenträger um eine RFID-Tag oder einen NFC-Tag handelt, in den auch Kalibrierungsdaten der Sensoreinheit abgelegt werden.

3. Vorrichtung (1) nach Anspruch 1, **dadurch gekennzeichnet, dass** der Datenträger (7) ein optisches Element - insbesondere ein Barcode oder ein QR-Code - ist.

4. Vorrichtung (1) nach einem der Ansprüche 1 bis 3, **dadurch gekennzeichnet, dass** die Sensoreinheit (2) offline, also außerhalb des Prozesses, unter vorgebbaren Umgebungsbedingungen kalibrierbar ist.

5. Vorrichtung (1) nach einem der Ansprüche 1 oder 3, **dadurch gekennzeichnet, dass** die Sensoreinheit (2) frei von elektronischen Bauteilen ist.

6. Vorrichtung (1) nach Anspruch 1, **dadurch gekennzeichnet, dass** die Sensoreinheit (2) und der Transmitter (3) reversibel miteinander verbindbar sind.

7. Vorrichtung nach Anspruch 1, **dadurch gekennzeichnet, dass** der Transmitter (3) mindestens eine Datenleseeinheit (10) zum Einlesen von Daten aus einem Datenträger (7) der Sensoreinheit (2) aufweist.

8. Vorrichtung nach Anspruch 7, **dadurch gekennzeichnet, dass** die Datenleseeinheit (10) zum Schreiben von Daten in den Datenträger (7) der Sensoreinheit (2) ausgestaltet ist.

9. Vorrichtung nach einem der Ansprüche 1 bis 8, **dadurch gekennzeichnet, dass** der Transmitter (3) mindestens eine Funk-Schnittstelle (11) aufweist.

10. Vorrichtung nach einem der Ansprüche 1 bis 9, **dadurch gekennzeichnet, dass** der Transmitter (3) mindestens eine Ein-/Ausgabe-Schnittstelle (20) aufweist.

## Claims

1. Device (1) for determining at least one measured variable - in particular the pH value - having at least one sensor unit (2) and at least one transmitter (3), wherein the sensor unit (2) is designed to generate at least one electrical primary signal in dependence on the measured variable, wherein the sensor unit (2) is designed to transmit the primary signal to the transmitter (3) via an analog output interface (4) and wherein the transmitter (3) is designed to process the primary signal, and wherein the sensor unit has a housing,
wherein the sensor unit (2) has only the analog output interface (4), wherein the sensor unit (2) is free of elements which generate a digital signal from the primary signal and/or determine a value of the measured variable from the primary signal, and that the sensor unit (2) is therefore not able to determine the value of the measured variable from the primary signal or to digitize the primary signal for further communication
and wherein the sensor unit (2) has at least one data carrier (7),
wherein data associated with the sensor unit (2) can be stored in the data carrier (7), and wherein the data carrier (7) is arranged on and/or in the housing (8) of the sensor unit (2), and
wherein the device comprises an electronic insert, wherein the sensor unit (2) is assigned to the at least one electronic insert (5), wherein the electronic insert (5) has at least one analog input interface (6), wherein the electronic insert (5) is designed to process at least the primary signal with respect to the measured variable, and wherein the electronic insert (5) and the transmitter (3) are reversibly connected to one another, and
wherein the transmitter (3) for processing primary signals of at least one sensor unit (2) has at least one electronics receptacle (9) for an electronic insert (5) assigned to the sensor unit (2) and processing the primary signals of the sensor unit (2), wherein the electronics receptacle (9) allows reversible insertion of the electronic insert (5).

2. Device (1) according to claim 1, **characterized in that** the data carrier is an RFID tag or an NFC tag, in which calibration data of the sensor unit are also stored.

3. Device (1) according to claim 1, **characterized in that** the data carrier (7) is an optical element - in particular a barcode or a QR code.

4. Device (1) according to any one of claims 1 to 3, **characterized in that** the sensor unit (2) can be calibrated offline, i.e. outside the process, under specified ambient conditions.

5. Device (1) according to claim 1 or 3, **characterized in that** the sensor unit (2) is free of electronic components.

6. Device (1) according to claim 1, **characterized in that** the sensor unit (2) and the transmitter (3) are reversibly connectable to each other.

7. Device according to claim 1, **characterized in that** the transmitter (3) has at least one data reader (10) for reading data from a data carrier (7) of the sensor unit (2).

8. Device according to claim 7, **characterized in that** the data reader (10) is designed to write data to the data carrier (7) of the sensor unit (2).

9. Device according to any one of claims 1 to 8, **characterized in that** the transmitter (3) has at least one radio interface (11).

10. Device according to any one of claims 1 to 9, **characterized in that** the transmitter (3) has at least one input/output interface (20).

## Revendications

1. Dispositif (1) de détermination d'au moins une grandeur mesurée, notamment une valeur pH, comprenant au moins une unité de détection (2) et au moins un transmetteur (3), l'unité de détection (2) étant conçue pour générer au moins un signal primaire électrique en fonction de la grandeur mesurée, l'unité de détection (2) étant conçue pour communiquer le signal primaire au transmetteur (3) par le biais d'une interface de sortie analogique (4) et le transmetteur (3) étant conçu pour traiter le signal primaire, l'unité de détection possédant un boîtier,
l'unité de détection (2) ne disposant que de l'interface de sortie analogique (4),
l'unité de détection (2) étant exempte d'éléments qui génèrent un signal numérique à partir du signal primaire et/ou qui déterminent une valeur de la grandeur mesurée à partir du signal primaire et l'unité de détection (2) n'étant par conséquent pas en mesure de déterminer la valeur de la grandeur mesurée à partir du signal primaire ou de numériser le signal primaire pour une communication supplémentaire et
l'unité de détection (2) possédant au moins un support de données (7),
des données attribuées à l'unité de détection (2) pouvant être enregistrées dans le support de données (7) et le support de données (7) étant disposé sur et/ou dans le boîtier (8) de l'unité de détection (2) et
le dispositif comportant au moins un module électronique, l'au moins un module électronique (5) étant affecté à l'unité de détection (2), le module électronique (5) disposant d'au moins une interface d'entrée analogique (6), le module électronique (5) étant conçu pour traiter au moins le signal primaire du point de vue de la grandeur mesurée et le module électronique (5) et le transmetteur (3) étant connectés l'un à l'autre de manière réversible et
le transmetteur (3), en vue du traitement des signaux primaires d'au moins une unité de détection (2), possédant au moins un emplacement d'accueil d'électronique (9) pour un module électronique (5) affecté à l'unité de détection (2) et traitant les signaux primaires de l'unité de détection (2), l'emplacement d'accueil d'électronique (9) autorisant une insertion réversible du module électronique (5).

2. Dispositif (1) selon la revendication 1, **caractérisé en ce que** le support de données est une étiquette RFID ou une étiquette NFC dans laquelle sont également stockées des données de calibrage de l'unité de détection.

3. Dispositif (1) selon la revendication 1, **caractérisé en ce que** le support de données (7) est un élément optique, notamment un code à barres ou un code QR.

4. Dispositif (1) selon l'une des revendications 1 à 3, **caractérisé en ce que** l'unité de détection (2) peut être calibrée hors ligne, c'est-à-dire en dehors du processus, dans des conditions environnantes pouvant être prédéfinies.

5. Dispositif (1) selon l'une des revendications 1 ou 3, **caractérisé en ce que** l'unité de détection (2) est exempte de composants électroniques.

6. Dispositif (1) selon la revendication 1, **caractérisé en ce que** l'unité de détection (2) et le transmetteur (3) peuvent être connectés l'un à l'autre de manière réversible.

7. Dispositif selon la revendication 1, **caractérisé en ce que** le transmetteur (3) possède au moins une unité de lecture de données (10) destinée à charger des données depuis un support de données (7) de l'unité de détection (2) .

8. Dispositif selon la revendication 7, **caractérisé en ce que** l'unité de lecture de données (10) est configurée pour écrire des données dans le support de données (7) de l'unité de détection (2).

9. Dispositif selon l'une des revendications 1 à 8, **caractérisé en ce que** le transmetteur (3) possède au moins une interface radioélectrique (11).

10. Dispositif selon l'une des revendications 1 à 9, **caractérisé en ce que** le transmetteur (3) possède au moins une interface d'entrée/sortie (20).
